# EUROPÄISCHE PATENTSCHRIFT

(11) **EP 2 348 591 B1**
(45) Veröffentlichungstag und Bekanntmachung des Hinweises auf die Patenterteilung: **19.11.2014**
(21) Anmeldenummer: 11152264.5
(22) Anmeldetag: 26.01.2011
(51) Int. Cl.: H02G 3/04, F16M 11/04

(54) **Tragarm**
Support arm
Bras de support

(30) Priorität: 26.01.2010 DE 102010000205
(43) Veröffentlichungstag der Anmeldung: 27.07.2011
(73) Patentinhaber: Rittal GmbH & Co. KG, 35745 Herborn (DE)
(72) Erfinder: Neuhof, Markus, 35630 Ehringshausen-Niederlemp (DE); Mueller, Matthias, 35683 Dillenburg (DE)
(74) Vertreter: Tönhardt, Marion

(56) Entgegenhaltungen:
- DE-C1- 3 805 425

## Beschreibung

Die Erfindung betrifft einen Tragarm für ein Tragarmsystem mit einem Tragprofil, das einen Aufnahmeraum teilweise umgibt, wobei der Aufnahmeraum mit der Umgebung über eine Einführöffnung in räumlicher Verbindung steht, wobei die Einführöffnung zumindest bereichsweise voneinander gegenüberliegenden Ansätzen des Tragprofiles begrenzt ist.

Tragarme werden als Teile von Tragarmsystemen eingesetzt. Sie dienen beispielsweise dazu, ein Maschinensteuergerät an einer Werkzeugmaschine aufzuhängen und einem Benutzer zugänglich zu machen. Das Maschinensteuergerät steht üblicherweise mittels elektrischer Signalleitungen mit der Maschinensteuerung in Verbindung. Die Signalleitungen sind in dem Aufnahmeraum des Tragprofiles geschützt untergebracht.

Aus der DE 38 05 425 A1 ist ein Tragarm für ein Tragarmsystem bekannt. Der Tragarm weist ein Tragprofil auf, das als Aluminium-Stangenpressprofil ausgebildet ist. Das Tragprofil weist Wandungselemente auf, die den Aufnahmeraum für die Signalleitungen begrenzen. Die Kabel können über eine Einführöffnung in den Aufnahmeraum eingebracht werden. Zur geschützten Abdeckung wird ein Deckelelement verwendet, das die Einführöffnung verschließt. Da die Tragprofile teilweise sehr hohen Beanspruchungen ausgesetzt sind, werden hohe Anforderungen an die Profilsteifigkeit gestellt. Dementsprechend ist in dem Bereich des Innenquerschnitts des Tragprofils ein horizontaler Quersteg angeordnet, der einteilig an vertikale Seitenwandungen des Tragprofils angeformt ist.

Bei sehr hohen Beanspruchungen bieten allseitig geschlossene Tragprofile gute Belastbarkeiten. Diese allseitig geschlossenen Tragprofile weisen ebenfalls einen Aufnahmeraum für Kabel auf, die allerdings durch die offenen Stirnseiten der Tragprofile eingeschoben werden müssen. Die nachträgliche Installation ergänzender Leitungen ist mit einem gewissen Montageaufwand verbunden. Ein solches Tragprofil ist beispielsweise in der P 44 03 593.4-09 bekannt.

Es ist Aufgabe der Erfindung, ein Tragarm für ein Tragarmsystem bereitzustellen, bei dem das Tragprofil eine hohe Profilsteifigkeit aufweist und bei dem jedoch gleichzeitig die Kabelinstallation einfach durchführbar ist.

Diese Aufgabe wird mit den Merkmalen des Anspruches 1 gelöst. Demgemäß ist es vorgesehen, dass die Ansätze des Tragprofils, die die Einführöffnung begrenzen, mittels eines Verbinders miteinander verbunden sind, und dass der Verbinder zwei gegeneinander verspannbare Befestigungsteile aufweist. Der Verbinder schließt somit die offene Seite des Tragprofils, wodurch sich ein quasi geschlossenes Hohlprofil ergibt. Dabei muss der Verbinder nicht über die gesamte Achsialerstreckung des Tragprofils reichen, sondern es reicht aus, wenn dieser auch nur an hoch beanspruchten Stellen befestigt ist. Die verspannbaren Befestigungsteile dienen dazu, die beiden Ansätze fest aneinander zu binden.

Eine erweiterte Funktionalität bietet der Verbinder dann, wenn er als Befestigungsstelle für zusätzliche Anbauten dient, die am Tragprofil befestigt werden sollen. Beispielsweise ist es denkbar, dass Kleingehäuse, Kabelhalter, Stellelemente, etc. an den Verbinder angekoppelt sind. Auch ist das Führen anderer Medien (z.B. Gase oder Flüssigkeiten), die getrennt von elektrischen Signalleitungen geführt werden müssen, dort möglich.

Gemäß einer bevorzugten Erfindungsvariante kann es vorgesehen sein, dass die Ansätze und die Befestigungsteile über Spannabschnitte miteinander in Wirkverbindung treten, wobei die Spannabschnitte eine Kraft in die Ansätze einbringen, die in Richtung auf den jeweils gegenüberliegenden Ansatz orientiert ist. Auf diese Weise wird eine spielfreie Verspannung des Verbinders mit den Ansätzen garantiert, wodurch sich ein definierter und fester Spannverband ergibt. Insbesondere ist dabei auch der Verbinder eindeutig gegenüber dem Tragprofil ausgerichtet.

Eine denkbare Erfindungsalternative ist dadurch gekennzeichnet, dass wenigstens eines der Befestigungsteile spitzenförmige Erhebungen aufweist, die sich in das Material des Tragprofils eingraben. Auf diese Weise wird ein Formschluss zwischen dem Verbinder und dem Tragprofil erreicht, der die Festigkeit weiter erhöht.

Wenn vorgesehen ist, dass an dem Tragprofil und/oder dem Verbinder eine Abdeckung lösbar befestigbar ist, die die Einführöffnung und/oder den Verbinder zumindest bereichsweise überdeckt, dann kann auf einfache Weise ein optisch ansprechender Abschluss erreicht werden.

Die Abdeckung kann dabei eine Verblendung aufweisen, an der die zwei Ansätze einteilig angeformt sind. Die Ansätze weisen dabei Rastelemente auf, die mit Gegenrastelementen des Tragprofils verrastet sind. Auf diese Weise lässt sich die Abdeckung einfach und schnell montieren. Eine besonders steife Ausgestaltung des Tragprofils, die insbesondere gegen Biege- und gleichzeitig Torsionsbeanspruchungen äußerst widerstandsfähig ist, ergibt sich dadurch, dass das Tragprofil mittels angeformter Begrenzungselemente in zwei oder mehrere Kammern unterteilt ist, wobei die Begrenzungselemente stegartig in Profillängsrichtung verlaufen, dass die Begrenzungselemente einstückig an den den Außenumfang begrenzenden Wandungsbereichen des Tragprofils angeschlossen sind und an ihrem anderen Endbereich an ein Verbindungselement angeschlossen sind, das innerhalb des von dem Tragprofil umschlossenen Raumes angeordnet ist.

Dabei können die Begrenzungselemente insbesondere V-förmig zueinander im Winkel stehen, wodurch aus unterschiedlicher Richtung wirkende Querkräfte zuverlässig abgetragen werden können.

Eine weitere bevorzugte Erfindungsvariante ist derart, dass wenigstens zwei Begrenzungselemente den Aufnahmeraum begrenzen. Hierdurch ergibt sich ein einfacher Profilaufbau.

Eine weitere Aussteifung des Tragprofils wird dadurch erreicht, dass beiderseits des Verbindungselementes jeweils zwei Begrenzungselemente angeordnet sind, die sich paarweise jeweils in Richtung zur Profilober- bzw. -unterseite hin erstrecken.

Die Erfindung wird im Folgenden anhand eines in den Zeichnungen dargestellten Ausführungsbeispieles näher erläutert. Es zeigen:
- Figur 1: in Stirnansicht ein Tragprofil eines Tragarmes mit einer Abdeckung;

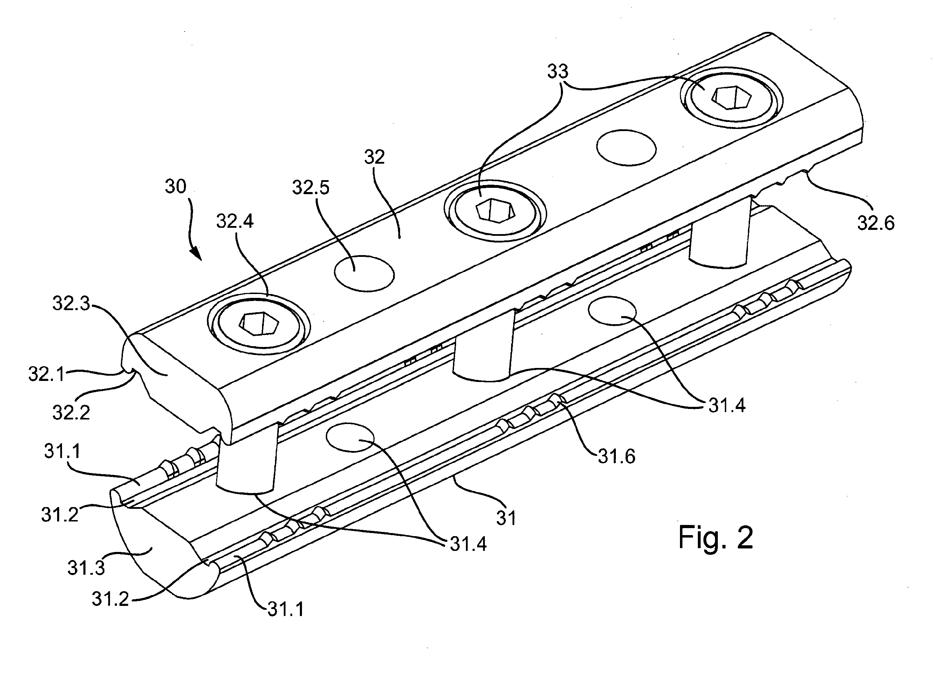

- Figur 2: einen Verbinder zur Ankopplung an das Tragprofil gemäß Figur 1 in perspektivischer Darstellung;
- Figur 3: das Tragprofil gemäß Figur 1 mit eingesetztem Verbinder;

- Figur 4: die Darstellung gemäß Figur 3 jedoch mit fertig montiertem Verbinder;
- Figur 5: eine perspektivische Darstellung des Tragprofils mit Verbinder und Abdeckung;
- Figur 6: das Tragprofil gemäß Figur 5 mit einem angebauten Kleingehäuse; und
- Figur 7: ein Tragprofil mit einer angebauten Stellspindel.

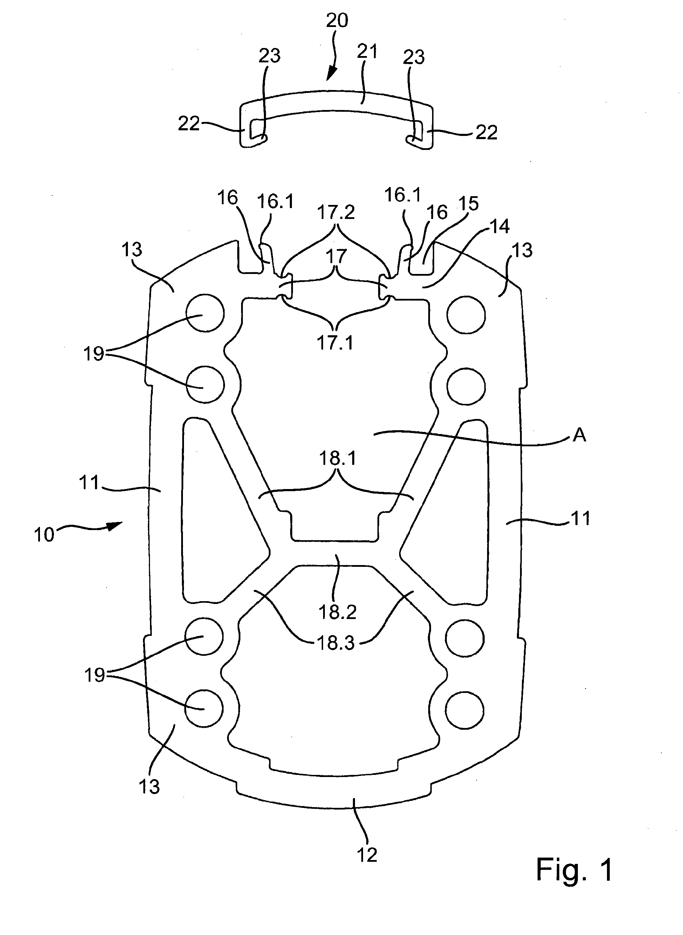

Wie die Figur 1 veranschaulicht, weist das Tragprofil 10 zwei zueinander parallele vertikale Seitenwände 11 auf, die an ihren längsseitigen Enden mit Eckstücken 13 abschließen. Die beiden unteren Eckstücke 13 sind mittels eines Übergangsstückes 12 einteilig miteinander verbunden. Die beiden oberen Eckstücke 13 tragen jeweils einen Ansatz 17, der stegartig ausgebildet ist und in Profillängsrichtung eine Einführöffnung begrenzt. In die beiden Ansätze 17 sind zwei Vertiefungen 17.1 und 17.2 in Form von Nuten eingearbeitet. Diese Vertiefungen 17.1 und 17.2 erstrecken sich in Profillängsrichtung. Der Ansatz 17 trägt weiterhin ein nach oben abstehendes Gegenrastelement, an das endseitig ein Rastvorsprung 16.1 angeformt ist. Das Gegenrastelement 16 begrenzt zusammen mit einer Wandung des Eckstücks 13 eine Nut 15. Wie vorstehend bereits erwähnt, begrenzen die beiden Ansätze 17 eine Einführöffnung, durch die hindurch ein Aufnahmeraum A zugänglich ist. Der Aufnahmeraum A wird dabei von Bereichen der beiden oberen Eckstücke 13, der Ansätze 17 und von Begrenzungsstegen 18.1 umgeben. Die Begrenzungsstege 18.1 schließen jeweils endseitig einteilig an die oberen Eckstücke 13 an und erstrecken sich im Winkel einwärts gerichtet zur Profilmitte hin. Die Begrenzungsstege 18.1 sind an ihrem, den Eckstücken 13 abgewandten Ende an ein Verbindungselement 18.2 angeformt. Dem Aufnahmeraum A abgewandt trägt das Verbindungselement 18.2 zwei weitere Verbindungsstege 18.3. Diese sind wiederum einteilig an die beiden unteren Eckstücke 13 angeformt und verlaufen ebenfalls winklig. Mit den Begrenzungselementen 18.1 und 18.3 und dem Verbindungselement 18.2 wird eine sternförmige Aussteifungsstruktur geschaffen, die die Steifigkeit des Tragprofils 10 deutlich erhöht.

Die Eckstücke 13 sind jeweils mit zwei einteilig eingeformten Schraubkanälen 19 ausgestattet, die sich in Profillängsrichtung durchgehend erstrecken. An diesen Schraubkanälen 19 können mittels Verbindungsschrauben nicht dargestellte Tragarmkomponenten angeschraubt werden. Beispielsweise werden als Tragarmkomponenten Eckstücke, Adapter, Drehgelenke, etc. angebaut.

Wie bereits vorstehend erwähnt wurde, begrenzen die beiden Ansätze 17 eine Einführöffnung, die Zugang zu dem Aufnahmeraum A schafft. Diese Einführöffnung kann mittels einer Abdeckung 20 überdeckt werden. Die Abdeckung 20 ist als Kunststoff-Formteil ausgebildet und weist eine konvexe Verblendung 21 auf, an die zwei nach unten abstehende Ansätze 22 einteilig angeformt sind. Die Ansätze 22 stehen zueinander parallel und im Abstand. Die freien Enden der Ansätze 22 schlie-βen mit Rastelementen 23 ab. Zur Montage der Abdeckung 20 wird diese derart auf das Tragprofil 10 aufgesetzt, dass die Ansätze 22 in die Nuten 15 des Tragprofils 10 eintauchen. Dabei werden die Rastelemente 23 an den Gegenrastelementen 16 nach außen ausgelenkt, bis sie den Rastvorsprung 16.1 hinterschnappen.

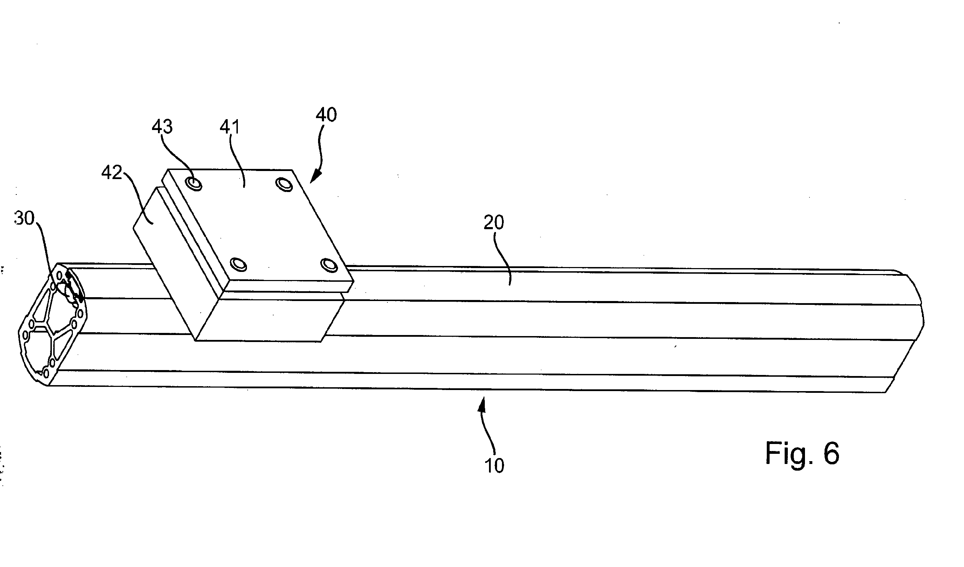

Die konvexe Verblendung 21 geht dann in die anschließenden Oberflächen der Eckstücke 13 über, sodass ein harmonischer Abschluss geschaffen wird, der dem Abschluss entspricht, der auf der gegenüberliegenden Seite mit dem Übergangsstück 12 gebildet ist. Figur 6 zeigt die montierte Abdeckung.

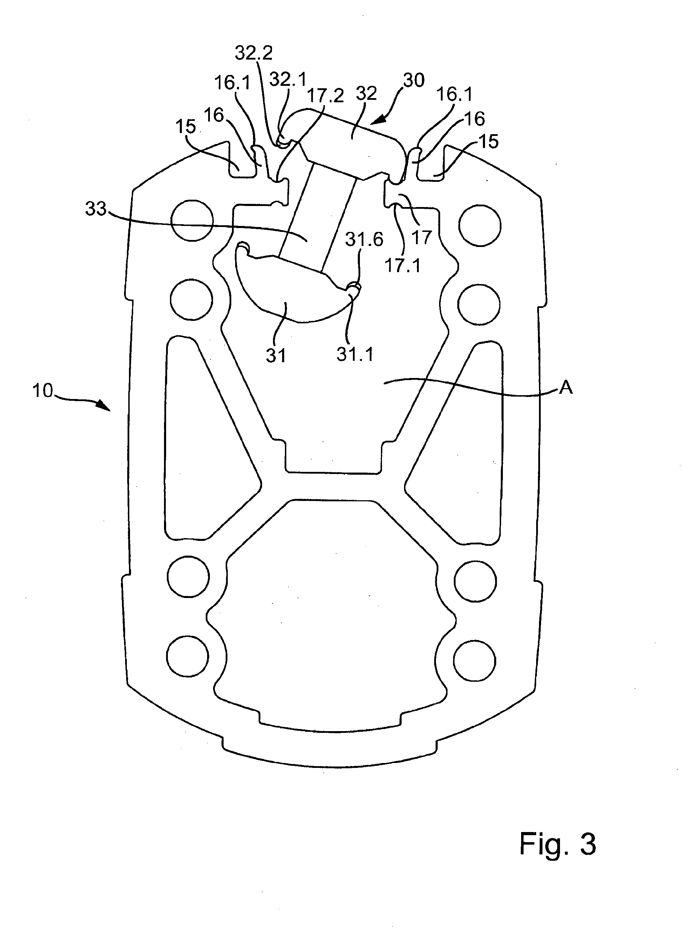

In Figur 3 ist ein Verbinder 30 dargestellt. Dieser Verbinder besteht aus zwei Befestigungsteilen 31 und 32, die im Wesentlichen baugleich ausgeführt sind. Die Befestigungsteile 31, 32 weisen jeweils ein Basisteil 31.3, 32.3 auf, an das seitlich Vorsprünge 31.1, 32.1 angeformt sind. Die Vorsprünge 31.1, 32.1 sind als Rippen mit konvex gewölbter Oberfläche ausgebildet. Einwärts gerichtet schließen sich an die Vorsprünge 31.1, 32.1 Ausnehmungen 31.2, 32.2 an, die in Form von Nuten in Längsrichtung des Verbinders 30 verlaufen. Zwischen den Ausnehmungen 31.1 bzw. 32.1 verbleibt ein Übergangsabschnitt. In diesem Übergangsabschnitt des Befestigungsteils 31 sind Gewindeaufnahmen 31.4 eingearbeitet. In dem Übergangsbereich des Befestigungsteils 32 sind den Gewindeaufnahmen 31.4 gegenüberliegend Schraubaufnahmen 32.4 und Bohrungen 32.5 eingebohrt. Den Gewindeaufnahmen 31.4 stehen Bohrungen 32.5 gegenüber. Durch die Schraubaufnahmen 32.4 können Klemmschrauben 33 hindurchgeführt und in die Gewindeaufnahmen 31.4 eingeschraubt werden. Durch die Bohrungen 32.5 hindurch können auch Schrauben zur Befestigung von Anbauteilen 40, 50 in die Gewindeaufnahmen 31.4 eingeschraubt werden. Wenn die Klemmschrauben 33 angezogen werden, so verringert sich der Abstand zwischen den beiden Befestigungsteilen 31 und 32. Dabei bewegen sich Erhebungen 32.6, die in Form von Zacken an die Vorsprünge 31.1 bzw. 32.1 angeformt sind, aufeinander zu.

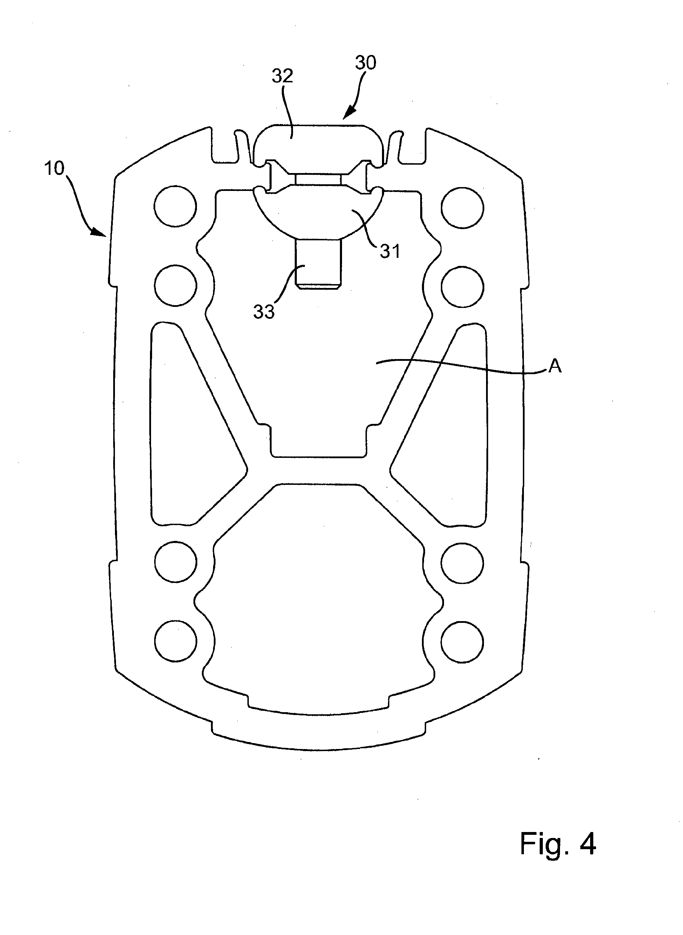

Der Verbinder 30 kann an dem Tragprofil 10 befestigt werden. Hierzu wird der Verbinder 30 in die Einführöffnung eingesetzt, wie dies die Figur 3 veranschaulicht. Dabei kann der Verbinder 30 entweder über die offene Längsseite des Tragprofils 10 eingeschoben oder, wie dies in Figur 3 veranschaulicht ist, dieser von oben in die Einführöffnung eingeschwenkt werden. Im eingeschwenkten Zustand liegt das Befestigungsteil 32 außenseitig auf den Ansätzen 17 auf. Das Befestigungsteil 31 ist im Bereich des Aufnahmeraumes A unterhalb der Ansätze 17 angeordnet. Wenn nun die Klemmschrauben 33 angezogen werden, so bewegen sich die Befestigungsteile 31, 32 aufeinander zu. Die Vorsprünge 32.1, 31.1 tauchen in die nutförmigen Vertiefungen 17.1, 17.2 der Ansätze 17 ein. Beim Verspannen der Klemmschrauben 33 graben sich die Erhebungen 32.6, 31.6 in den Nutgrund der Vertiefung 17.2, 17.1 ein und bilden so einen Formschluss. Auf diese Weise ist der Verbinder 30 sowohl in dessen Längs- als auch in dessen Querrichtung formschlüssig mit dem Tragprofil 10 verbunden. Diese Montagestellung ist in der Figur 4 veranschaulicht.

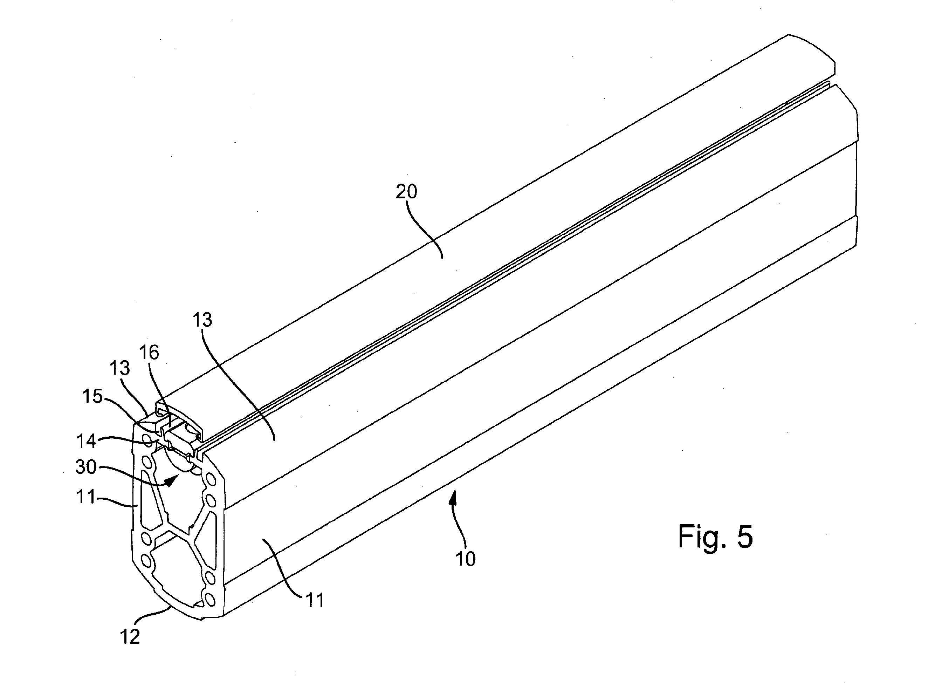

Wie die Figur 5 zeigt, kann der Verbinder 30 mit einer entsprechenden Abdeckung 20, wie sie unter Bezugnahme auf die Figur 1 bereits erläutert wurde, abgedeckt werden. Der Verbinder 30 ist damit optisch uneinsehbar. Im Rahmen der Erfindung kann sich der Verbinder 30 über die gesamte Länge des Tragprofils 10 oder nur über einen begrenzten Teilbereich des Tragprofils erstrecken.

Mit dem Verbinder 30 wird das Tragprofil 10 ausgesteift. Weiterhin können an dem Verbinder 30 Anbauteile 40, 50 befestigt werden. In der Figur 6 ist an dem Verbinder 30 ein Kleingehäuse als Anbauteil 40 angebunden. Das Kleingehäuse weist ein Gehäuseunterteil 42 auf, das mit einem Deckel 41 verschlossen werden kann. Der Deckel 41 ist mit dem Gehäuseunterteil über Schrauben 43 verbunden. Bei abgenommenem Deckel 41 können durch den Gehäuseboden des Gehäuseunterteils Befestigungsschrauben hindurchgeführt und in die Befestigungsaufnahmen 31.4 des Verbinders 30 eingeschraubt werden. Auf diese Weise lässt sich das Anbauteil 40 mit dem Tragprofil 10 verbinden.

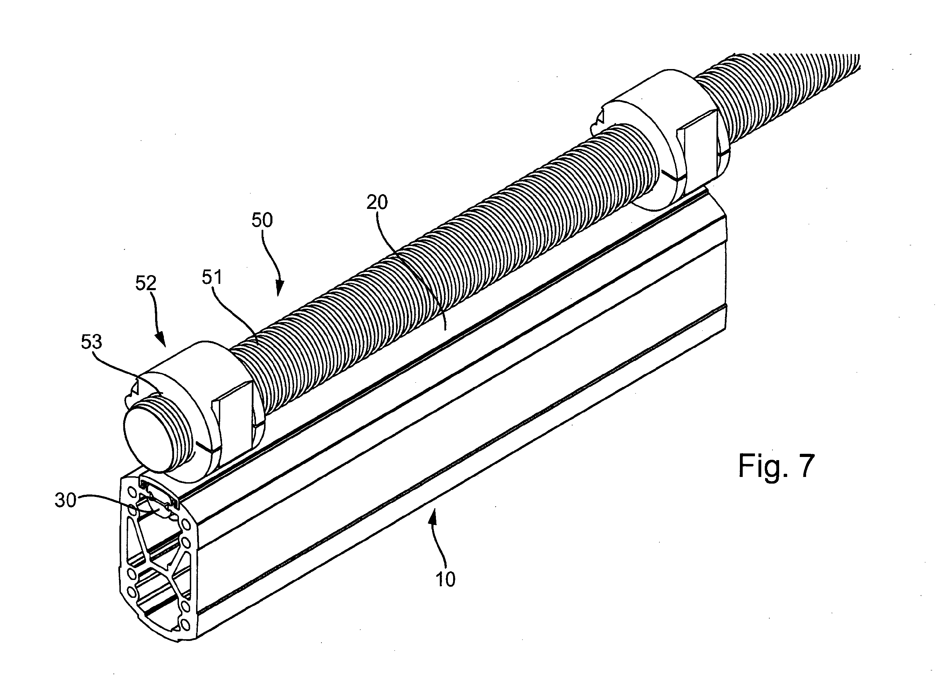

In Figur 7 ist eine weitere Ausführungsvariante eines Anbauteils 50 dargestellt. Wie diese Zeichnung veranschaulicht, sind mit zwei an den längsseitigen Enden des Tragprofils angeordneten Verbindern 30 Schellen/Haltebügel 52 verschraubt. Die Schellen/Haltebügel 52 sind wieder in den Befestigungsaufnahmen 31.4 der Verbinder 30 festgelegt. Die Schellen/Haltebügel 52 dienen der Befestigung von Schutz-oder Medienschläuchen oder der direkten Befestigung von Kabeln.

## Patentansprüche

1. Tragarm für ein Tragarmsystem mit einem Tragprofil (10), das einen Aufnahmeraum teilweise umgibt, wobei der Aufnahmeraum mit der Umgebung über eine Einführöffnung in räumlicher Verbindung steht, und wobei die Einführöffnung zumindest bereichsweise von einander gegenüberliegenden Ansätzen (17) des Tragprofils (10) begrenzt ist,
**dadurch gekennzeichnet,**
**dass** die Ansätze (17) mittels eines Verbinders (30) miteinander verbunden sind, und dass der Verbinder (30) zwei gegeneinander verspannbare Befestigungsteile (31, 32) aufweist.

2. Tragarm nach Anspruch 1,
**dadurch gekennzeichnet,**
**dass** die Ansätze (17) und die Befestigungsteile (31, 32) über Spannabschnitte miteinander in Wirkverbindung stehen, wobei die Spannabschnitte eine Kraft in die Ansätze (17) einbringen, die in Richtung auf den jeweils gegenüberliegenden Ansatz (17) orientiert ist.

3. Tragarm nach einem der Ansprüche 1 bis 2,
**dadurch gekennzeichnet,**
**dass** die Ansätze (17) an gegenüberliegenden Seiten mit Vertiefungen (17.1, 17.2) ausgestattet sind und in die Vorsprünge (31.1, 31.2) der Befestigungsteile (31, 32) eingreifen.

4. Tragarm nach einem der Ansprüche 1 bis 3
**dadurch gekennzeichnet,**
**dass** wenigstens eines der Befestigungsteile (31, 32) spitzenförmige Erhebungen (31.6, 32.6) aufweist, die sich in das Material des Tragprofils (10) eingraben.

5. Tragarm nach einem der Ansprüche 1 bis 4,
**dadurch gekennzeichnet,**
**dass** an dem Tragprofil (10) und/oder an dem Verbinder (30) eine Abdeckung (20) lösbar befestigbar ist, die die Einführöffnung und/oder den Verbinder (30) zumindest bereichsweise überdeckt.

6. Tragarm nach Anspruch 5,
**dadurch gekennzeichnet,**
**dass** die Abdeckung (20) eine Verblendung (21) aufweist, an die zwei Ansätze (22) einteilig angeformt sind, und dass die Ansätze (22) Rastelemente (23) tragen, die mit Gegenrastelementen (16) des Tragprofils (10) verrastet sind.

7. Tragarm nach einem der Ansprüche 1 bis 6,
**dadurch gekennzeichnet,**
**dass** der Verbinder (30) wenigstens eine Befestigungsaufnahme (31.4) aufweist, an der ein Anbauteil (40) befestigbar ist.

8. Tragarm nach einem der Ansprüche 1 bis 7,
**dadurch gekennzeichnet,**
**dass** das Tragprofil (10) mittels angeformter Begrenzungselemente (18.1, 18.2) in zwei oder mehrere Kammern unterteilt ist, wobei die Begrenzungselemente (18.1, 18.2) stegartig in Profillängsrichtung verlaufen,
**dass** die Begrenzungselemente (18.1, 18.2) einseitig an den den Außenumfang begrenzenden Wandungsbereich des Tragprofils (10) angeschlossen sind und an ihrem anderen Endbereich an ein Verbindungselement (18.2) angeschlossen sind, das innerhalb des von dem Tragprofil (10) umschlossenen Raumes angeordnet ist.

9. Tragarm nach Anspruch 8,
**dadurch gekennzeichnet,**
**dass** die Begrenzungselemente (18.1, 18.2) V-förmig zueinander im Winkel stehen.

10. Tragarm nach einem der Ansprüche 8 oder 9,
**dadurch gekennzeichnet,**
**dass** wenigstens zwei der Begrenzungselemente (18.1) den Aufnahmeraum begrenzen.

11. Tragarm nach einem der Ansprüche 8 bis 10,
**dadurch gekennzeichnet,**
**dass** beiderseits des Verbindungselementes (18.2) jeweils zwei Begrenzungselemente (18.1, 18.3) angeordnet sind, die sich paarweise jeweils in Richtung zur Profilober- bzw. -unterseite hin erstrecken.

## Claims

1. A support arm for a support arm system having a support profile (10) that surrounds a receiving space in part, wherein the receiving space is in spatial connection with the environment via an insert opening, and wherein the insert opening is delimited at least in part by opposing necks (17) of the support profile (10),
**characterized in that**
the necks (17) are connected with each other by means of a connector (30), wherein said connector (30) comprises two fastener parts (31, 32) that may be clamped together.

2. The support arm according to claim 1,
**characterized in that**
the necks (17) and the fastener parts (31, 32) are coupled with each other by means of tensioning sections, wherein that tensioning sections induce a force into the necks (17) that is oriented in direction towards the respectively opposing necks (17).

3. The support arm according to one of claims 1 or 2,
**characterized in that**
the necks (17) are provided at opposing sides with indentations (17.1, 17.2) and engage protrusions (31.1, 31.2) of the fastener parts (31, 32).

4. The support arm according to one of claims 1 to 3,
**characterized in that**
at least one of said fastener parts (31, 32) comprises elevations (31.6, 32.6) in the form of prongs that dig into the material of the support profile (10).

5. The support according to one of claims 1 to 4,
**characterized in that**
a cover (20) is mounted detachable at the support profile (10) and/or at the connector (30) covering the insert opening and/or the connector (30) at least in part.

6. The support arm according to claim 5,
**characterized in that**
the cover (20) comprises a blind (21) having two integrally molded tabs (22), wherein the tabs (22) support latching elements (23) that latch behind counterlatching elements (16) of the support profile (10).

7. The support arm according to one of claims 1 to 6,
**characterized in that**
the connector (30) comprises at least one mounting receptacle (31.4) at which a mounting part (40) may be mounted.

8. The support arm according to one of claims 1 to 7,
**characterized in that**
the support profile (10) is divided into two or more chambers by means of molded delimiting elements (18.1, 18.2), wherein the delimiting elements (18.1, 18.2) extend in longitudinal direction of the profile in a web-like manner, wherein the delimiting elements (18.1, 18.2) are connected at one side to the wall area of the support profile (10) delimiting the outer circumference and to a connecting element (18.2) at their other end section, wherein the connecting element (18.2) is placed within the space enclosed by the support profile (10).

9. The support arm according to claim 8,
**characterized in that**
the delimiting elements (18.1, 18.2) are oriented with respect to each other in a V-like manner enclosing an angle.

10. The support arm according to one of claims 8 or 9,
**characterized in that**
at least two of the delimiting elements (18.1, 18.2) delimit the receiving space.

11. Support arm according to one of claims 8 to 10,
**characterized in that**
on both sides of the connecting element (18.2) respectively two delimiting elements (18.1, 18.3) are arranged that respectively extend pairwise in the direction of the profile top side and the profile bottom side, respectively.

## Revendications

1. Bras de support pour un système de bras de support, comportant un profilé de support (10), qui entoure au moins partiellement un logement, ledit logement communiquant physiquement avec l'environnement par l'intermédiaire d'une ouverture d'introduction, et ladite ouverture d'introduction étant délimitée au moins par zones par des épaulements (17) se faisant face sur le profilé de support (10),
**caractérisé en ce que** les épaulements (17) sont reliés l'un à l'autre par un élément de liaison (30), et **en ce que** l'élément de liaison (30) comporte deux parties de fixation (31, 32) pouvant être serrées l'une contre l'autre.

2. Bras de support selon la revendication 1, **caractérisé en ce que** les épaulements (17) et les parties de fixation (31, 32) sont amenés en liaison active entre eux par des parties de serrage, lesdites parties de serrage introduisant dans les épaulements (17) une force qui est orientée vers l'épaulement (17) respectivement en face.

3. Bras de support selon l'une quelconque des revendications 1 à 2, **caractérisé en ce que** les épaulements (17), sur leurs côtés face à face, sont munis de creux (17.1, 17.2) et s'engagent dans les saillies (31.1, 31.2) des parties de fixation (31, 32).

4. Bras de support selon l'une quelconque des revendications 1 à 3, **caractérisé en ce qu'**au moins l'une des parties de fixation (31, 32) comporte des reliefs (31.6, 32.6) en forme de pointe, qui s'enfoncent dans le matériau du profilé de support (10).

5. Bras de support selon l'une quelconque des revendications 1 à 4, **caractérisé en ce qu'**un couvercle (20), qui recouvre au moins par zones l'ouverture d'introduction et/ou l'élément de liaison (30), peut être fixé de manière amovible contre le profilé de support (10) et/ou l'élément de liaison (30).

6. Bras de support selon la revendication 5, **caractérisé en ce que** le couvercle (20) comporte un cache (21), contre lequel deux talons (22) sont formés d'un seul tenant, et **en ce que** lesdits talons (22) portent des éléments d'encliquetage (23) qui sont encliquetés dans des éléments d'encliquetage antagonistes (16) du profilé de support (10).

7. Bras de support selon l'une quelconque des revendications 1 à 6, **caractérisé en ce que** l'élément de liaison (30) comporte au moins un logement de fixation (31.4), sur lequel une pièce rapportée (40) peut être fixée.

8. Bras de support selon l'une quelconque des revendications 1 à 7, **caractérisé en ce que** le profilé de support (10) est divisé en deux ou plusieurs chambres au moyen d'éléments de séparation (18.1, 18.2) formés sur ledit profilé, lesdits éléments de séparation (18.1, 18.2) s'étendant en forme d'entretoises dans le sens longitudinal du profilé, **en ce que** les éléments de séparation (18.1, 18.2) sont attachés, à une extrémité, à la zone de paroi du profilé de support (10), délimitant le contour extérieur et, au niveau de leur autre extrémité, sont attachés à un élément de jonction (18.2), qui est disposé à l'intérieur de la chambre entourée par le profilé de support (10).

9. Bras de support selon la revendication 8, **caractérisé en ce que** les éléments de séparation (18.1, 18.2) sont disposés en forme de V en formant un angle entre eux.

10. Bras de support selon la revendication 8 ou 9, **caractérisé en ce qu'**au moins deux des éléments de séparation (18.1) délimitent le logement.

11. Bras de support selon l'une quelconque des revendications 8 à 10, **caractérisé en ce que** de part et d'autre de l'élément de jonction (18.2) sont disposés respectivement deux éléments de séparation (18.1, 18.2), qui s'étendent par paires respectivement vers le côté supérieur du profilé et vers le côté inférieur du profilé.
